# EUROPEAN PATENT SPECIFICATION

(11) **EP 1 142 384 B1**
(45) Date of publication and mention of the grant of the patent: **19.07.2006**
(21) Application number: 99964714.2
(22) Date of filing: 27.12.1999
(51) Int. Cl.: H04Q 7/28, H04Q 7/30, H04Q 7/32

(54) **MOBILE COMMUNICATION SYSTEM**
MOBILES KOMMUNIKATIONSSYSTEM
SYSTEME DE COMMUNICATION MOBILE

(30) Priority: 30.12.1998 FI 982826
(43) Date of publication of application: 10.10.2001
(73) Proprietor: EADS Secure Networks Oy, 00380 Helsinki (FI)
(72) Inventor: VÄHÄTALO, Antti, FIN-33610 Tampere (FI)
(74) Representative: Holmström, Stefan Mikael
(86) International application number: PCT/FI1999/001079
(87) International publication number: WO 2000/041419

(56) References cited:
- WO-A1-96/24200
- WO-A1-98/28734
- WO-A2-97/16819
- WO-A2-98/47299

## Description

The present invention relates to discontinuous transmission DTX, and particularly to controlling discontinuous transmission.

There are previously known mobile communication systems that allow discontinuous transmission to be used during a call in order to decrease power consumption and minimise RF interference caused by the transmission. When discontinuous transmission is utilised, a radio transmitter interrupts the transmission during pauses in speech. To enable this, the transmitter is equipped with means for detecting speech activity. Just before interrupting the transmission, the transmitter sends the receiving side information indicating a transition to discontinuous transmission as well as a frame that comprises parameters depicting background noise appearing on the transmitting side, i.e. information about the spectrum and strength of the background noise.

When the receiver receives the information about discontinuous transmission and the parameters depicting the background noise, the receiver starts generating comfort noise on the basis of the received parameters. The advantage achieved by generating comfort noise is that, instead of complete silence, comfort noise can be conveyed to the other party to the call. Comfort noise thus prevents the other party to the call from detecting that the transmitter has interrupted the transmission.

A prior art solution for utilizing discontinuous transmission is disclosed in WO-A-9847299. where the load of a mobile communication system is controlled by regulating parameters which the mobile stations utilize for implementing discontinuous transmission.

Utilising discontinuous transmission requires that both the transmitter and the receiver of the other party to the call are capable of utilising discontinuous transmission. A problem arises with mobile communication systems that allow both transceiver units that cannot utilise discontinuous transmission and transceiver units that can utilise discontinuous transmission. If the transmitter tries to utilise discontinuous transmission with a receiver that cannot use discontinuous transmission, it may happen that the receiver interprets the parameters depicting comfort noise, for example, as normal speech, Consequently, the receiver forwards completely incorrect signals. An example of a mobile communication system that allows both mobile stations that can utilise discontinuous transmission and mobile stations that cannot utilise discontinuous transmission is the TETRA (Terrestrial Trunked Radio) system.

An object of the present invention is to solve the problems described above and provide a solution for utilising discontinuous transmission in a mobile communication system without causing interference or events of error to transceiver units that cannot utilise discontinuous transmission. This object is achieved by a method as defined in independent claim 1, a mobile communication system as defined in independent claim 5 and a transceiver unit as defined in independent claim 8.

The invention is based on the idea that introducing discontinuous transmission is allowed only when the transceiver unit has received, before the introduction of discontinuous transmission, from the other party to the connection a predetermined message indicating that also the other party to the connection can utilise discontinuous transmission. A situation can thus be avoided in which signals associated with discontinuous transmission are transmitted to the other party to the connection when said other party is incapable of processing and interpreting the signals correctly. In accordance with the invention, transceivers capable of discontinuous transmission are arranged to send the other party to the connection a predetermined message indicating discontinuous transmission after the connection has been set up. When both parties to the connection operate in this manner, they detect, already at the beginning of the connection, that discontinuous transmission is allowed during the connection.

Hence, the most significant advantages of the solution of the invention are that the invention enables discontinuous transmission to be used in a system having also transceivers that cannot utilise discontinuous transmission, that the solution of the invention can ensure that the transceiver unit changes over to discontinuous transmission only when also the other party to the connection is capable of utilising discontinuous transmission, and that the transceiver units can themselves indicate to each other that they can utilise discontinuous transmission, in which case it is unnecessary to store that information in a database in the network.

The preferred embodiments of the method, mobile communication system and transceiver unit of the invention are disclosed in the attached dependent claims 2 to 4, 6 to 7 and 9 to 12.

In the following, the invention will be described by way of example with reference to the accompanying drawings, in which
Figure 1 is a flow diagram of a first preferred embodiment of a method in accordance with the invention,
Figure 2 is a block diagram of a first preferred embodiment of a system in accordance with the invention, and
Figure 3 is a block diagram of a first preferred embodiment of a transceiver unit in accordance with the invention.

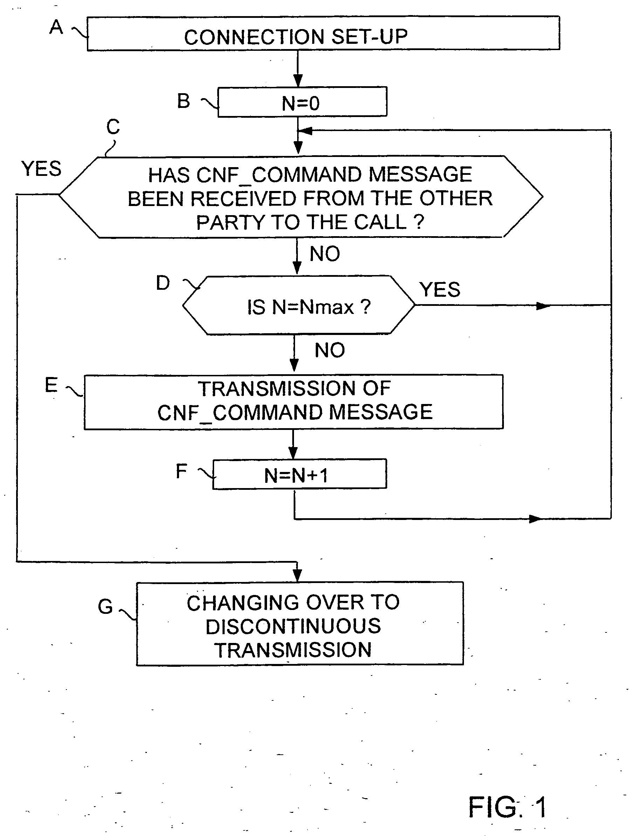

Figure 1 is a block diagram of a first preferred embodiment of a method in accordance with the invention. The flow diagram of Figure 1 can be utilised for controlling discontinuous transmission of transceivers of the TETRA system, for example.

In the case of Figure 1, it is assumed by way of example that from a mobile station 1, which can utilise discontinuous transmission, a call is made to a second mobile station 2. In block A, the connection between the mobile stations is set up in a manner known per se, whereafter a counter in the memory of the mobile station 1 is reset in block B.

In block C, the mobile station 1 checks whether it has received from the other party to the connection, i.e. the mobile station 2, a CNF_COMMAND message which is used in the embodiment of Figure 1 by way of example as a predetermined message indicating that discontinuous transmission is allowed. If it is detected in block C that the mobile station 1 has received a CNF_COMMAND message from the mobile station 2, this means that the mobile station 2 can also utilise discontinuous transmission. The mobile station 1 then starts utilising discontinuous transmission in block G. During discontinuous transmission, the mobile station 1 interrupts the transmission every time it detects a pause in the speech of the user thereof. Just before interrupting the transmission, however, the mobile station 1 transmits a CNF_COMMAND message as well as, together with the message, a comfort noise frame CNF to the mobile station 2. In order for the mobile station 2 to be able to distinguish the CNF frame from a normal speech frame, unused bits of the CNF frame are coded to a value zero.

The CNF frame comprises information about the spectrum and strength of background noise in the environment of the mobile station 1. On the basis of these parameters, the mobile station 2 can, in a manner known per se, generate comfort noise to the user interface thereof. The mobile station 2 starts generating comfort noise as soon as it receives the CNF_COMMAND message and the CNF frame from the other party to the connection.

If, on the other hand, it is detected in block C that the mobile station 1 has not received a CNF_COMMAND message from the mobile station 2, the process moves to block D where it is checked whether the mobile station 1 has transmitted a CNF_COMMAND message already a predetermined number of times Nmax (four times, for example) to the mobile station 2. The operator can determine how many times the mobile station transmits the CNF_COMMAND message during a connection.

If it is detected in block D that the number of transmission times of the CNF_COMMAND message do not exceed the limit Nmax, in block E the mobile station 1 transmits a predetermined message indicating discontinuous transmission to the mobile station 2 over a speech channel (i.e. the traffic channel used by the call) when the mobile station 1 detects a pause in the speech at the beginning of the connection. In the case of Figure 1, it is assumed by way of example that said message to be transmitted is a CNF_COMMAND message. The mobile station 1 transmits the message in the first half of the time slot, whereafter it continues speech coding and codes the latter half of the speech frame as if it were a normal speech frame.

In the TETRA system, the network transmits speech frames directly to the other party to the connection to be decoded. Hence, the mobile station 2 decodes the frame described above which comprises the CNF_COMMAND message. If the mobile station 2 is incapable of discontinuous transmission it does not understand the CNF_COMMAND message either. In such a case, the mobile station 2 replaces the CNF_COMMAND message with a "Missing Frame Generation" procedure known per se in the TETRA system. Also other speech frames used for signalling undergo a similar procedure. The procedure does not significantly harm the connection quality. In order to minimise the disadvantages, transmission of the CNF_COMMAND message can be restricted such that it is transmitted in every M^{th} frame at most (M being 30, for example).

If, on the other hand, the mobile station 2 is capable of discontinuous transmission, it detects from the CNF_COMMAND message that also the other party to the connection; i.e. the mobile station 1, can utilise discontinuous transmission.

If, on the other hand, it is detected in block D that the limit Nmax has been reached, no further CNF_COMMAND messages are transmitted from the mobile station 1 to the mobile station 2 during the ongoing connection. Until the end of the connection, however, the mobile station 1 monitors signals transmitted from the other party to the call in order to detect a potential CNF_COMMAND message. Hence, blocks C and D are repeated until the call is terminated or a CNF_COMMAND message is detected.

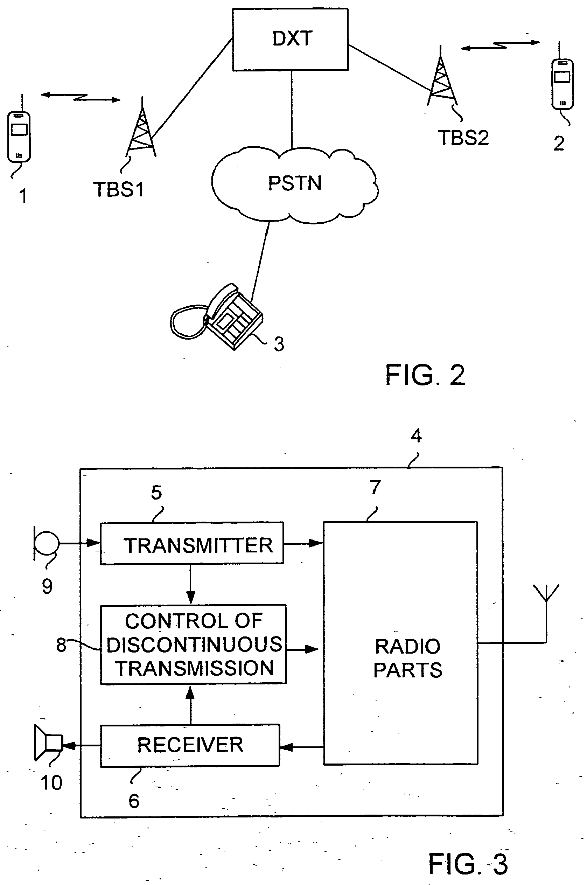

Figure 2 is a block diagram of a first preferred embodiment of a system in accordance with the invention. It is assumed by way of example that the system of Figure 2 is a TETRA system.

In the case of Figure 2, the mobile station 1 can set up a telecommunication connection to the mobile station 2 via a base station TBS1, a mobile services switching centre DXT and a base station TBS 2 in a manner known per se. Next, the mobile station 1 operates as described in connection with the flow diagram of Figure 1, i.e. the mobile station 1 transmits a predetermined message indicating discontinuous transmission, such as a CNF_COMMAND message, to the other party 2 to the connection a predetermined number of times or until it receives the same message from the mobile station 2. The mobile station 1 starts using discontinuous transmission only after receiving the CNF_COMMAND message, as described in connection with Figure 1.

In the case of Figure 2, the mobile station 1 can utilise discontinuous transmission also during a connection set up to a subscriber station 3 of a public telecommunication network PSTN. In order to enable this, the transceiver unit of the base station TBS1 is equipped with means for utilising discontinuous transmission. Hence, the base station TBS1 transmits a CNF_COMMAND message to the mobile station 1 after the connection has been set up, in which case the mobile station knows that discontinuous transmission is feasible. Next, the transceiver unit of the base station starts generating and forwarding comfort noise to the subscriber station 3 every time it receives a CNF_COMMAND message and a CNF frame from the mobile station 1.

Figure 3 is a block diagram of a first preferred embodiment of a transceiver unit 4 in accordance with the invention. In the case of Figure 3, it is assumed by way of example that the transceiver unit is the transceiver unit of a mobile station with a microphone 9 and a loudspeaker 10 connected thereto.

Radio parts 7 of the transceiver unit feed signals received from a radio path to a receiver 6. The receiver 6 forwards speech signals to the loudspeaker 10. The receiver 6 comprises detection means arranged to detect a predetermined message indicating discontinuous transmission, such as a CNF_COMMAND message, for example. When the detection means detect such a message, information about this is transmitted to control means 8 of discontinuous transmission.

The receiver 6 further comprises means for generating comfort noise. If the receiver 6 receives a CNF frame in connection with the CNF_COMMAND message, it starts generating comfort noise according to the parameters included in the CNF frame, the comfort noise then being fed to the loudspeaker 10. Generating comfort noise is continued until the transceiver unit 4 again receives signals which, based on the decoding result, comprise speech, in which case the receiver feeds the decoded signal to the loudspeaker.

When the control means 8 have received information about the reception of the CNF_COMMAND message, they start monitoring the speech received via the microphone 9 by a voice activity detection (VAD) algorithm known per se. If the control means 8 detect a pause in the speech, they activate the radio part 7 to transmit a CNF_COMMAND message and a CNF frame that comprises parameters necessary for generating comfort noise. Next, the control means 8 direct the radio part 7 to interrupt the transmission. If the pause in the speech is long, the control means 8 direct the radio part to transmit a new CNF_COMMAND message and a new CNF frame at determined intervals. When the pause in the speech ends, the control means 8 activate the radio part 7 to continue transmitting the coded voice signals received via the microphone 9 to the radio path.

It is to be understood that the above description and the accompanying drawings are only intended to illustrate the present invention. It is obvious to those skilled in the art that the invention can be varied and modified in many ways without departing from the scope of the invention defined in the attached claims.

## Claims

1. A method of implementing discontinuous transmission of a transceiver unit in a mobile communication system, **characterized by** comprising the steps of:
arranging the transceiver unit to transmit, after the connection set-up of a new connection, a predetermined message indicating to the other party to the connection that discontinuous transmission is allowed,
monitoring signals received by said transceiver unit from the other party to the connection in order to detect the predetermined message indicating that discontinuous transmission is allowed, and
directing the transceiver unit to use discontinuous transmission with said other party when the predetermined message has been received.

2. A method as claimed in claim 1, **characterized by** said transceiver unit being arranged to transmit said predetermined message over a traffic channel of the mobile communication system.

3. A method as claimed in claim 1 or 2, **characterized by** said transceiver unit being arranged to transmit said predetermined message to the other party to the connection a predetermined number of times or until said predetermined message has been received from the other party to the connection.

4. A method as claimed in any one of claims 1 to 3, **characterized by** said transceiver unit being the transceiver unit of a mobile station or a base station.

5. A mobile communication system comprising
a first and a second transceiver units (1, 2, TBS1) communicating with each other and comprising means for utilising discontinuous transmission,
**characterized in that**
the transmission means of the first and the second transceiver units (1, 2, TBS1) are arranged to transmit, after the set-up of a data transmission connection, a predetermined message indicating to the other party to the data transmission connection that discontinuous transmission is allowed, that
the first and the second transceiver units (1, 2, TBS1) comprise detection means for detecting the reception of said predetermined message, and that
the means for utilising discontinuous transmission of the first and the second transceiver units (1, 2, TBS1) respectively are responsive to the detection means in order to introduce discontinuous transmission with said other party when the detection means of the first or the second transceiver units respectively have detected the reception of said predetermined message.

6. A mobile communication system as claimed in claim 5, **characterized in that** the first and the second transceiver units (1, 2, TBS1) are transceiver units of mobile stations, and that the telecommunication connection between the first and the second transceiver units (1, 2) is formed via at least one base station (TBS2).

7. A mobile communication system as claimed in claim 5, **characterized in that** the first transceiver unit (1) is the transceiver unit of a mobile station, and that the second transceiver unit is the transceiver unit of a base station (TBS1).

8. A transceiver unit (4) in a mobile communication system, the transceiver unit comprising:
a transmitter (5, 7) comprising means for utilising discontinuous transmission,
a receiver (6, 7) for receiving signals from a radio path, and
detection means (6, 8) for detecting a predetermined message indicating that discontinuous transmission is allowed from the signals received by the receiver, **characterized in that**
the transmitter (5, 7) is arranged to transmit, after the connection set-up of a new connection, the predetermined message indicating that discontinuous transmission is allowed to the other party to the connection, that
the transmitter (5, 7) is responsive to the detection means (6, 8) in order to introduce discontinuous transmission with said other party after the detection means have detected the message indicating that discontinuous transmission is allowed received from the other party to the connection, and that
the receiver (4) comprises means (6, 7) for receiving parameters depicting comfort noise from the radio path and means (6) for generating and forwarding comfort noise according to said parameters.

9. A transceiver unit as claimed in claim 8, **characterized in that** the transmitter (5, 7) is arranged to transmit said predetermined message indicating discontinuous transmission to the other party to the connection over a traffic channel of the mobile communication system.

10. A transceiver unit as claimed in claim 8 or 9, **characterized in that** said transceiver unit is the transceiver unit of a base station in the mobile communication system.

11. A transceiver unit as claimed in claim 8 or 9, **characterized in that** said transceiver unit is the transceiver unit (4) of a mobile station in the mobile communication system.

12. A transceiver unit as claimed in claim 8 or 9, **characterized in that** said transceiver unit is the transceiver unit of a mobile station in a TETRA system.

## Patentansprüche

1. Verfahren zum Implementieren diskontinuierlicher Übertragung einer Sende-/Empfangseinheit in einem mobilen Kommunikationssystem, **dadurch gekennzeichnet, dass** es die Schritte enthält:
Einrichten der Sende-/Empfangseinheit zum Übertragen einer vorbestimmten Nachricht nach dem Verbindungsaufbau einer neuen Verbindung, welche der anderen Partei der Verbindung anzeigt, dass diskontinuierliche Übertragung erlaubt ist,
Überwachen von durch die Sende-/Empfangseinheit von der anderen Partei für die Verbindung empfangene Signal, um die vorherbestimmte Nachricht, die anzeigt, dass diskontinuierliche Übertragung erlaubt ist, zu erfassen, und
Anweisen der Sende-/Empfangseinheit, diskontinuierliche Übertragung mit der anderen Partei zu verwenden, sobald die vorbestimmte Nachricht empfangen worden ist.

2. Verfahren nach Anspruch 1, **dadurch gekennzeichnet, dass** die Sende-/Empfangseinheit eingerichtet ist, diese vorherbestimmte Nachricht über einen Verkehrskanal des mobilen Kommunikationssystems zu übertragen.

3. Verfahren nach Anspruch 1 oder 2, **dadurch gekennzeichnet, dass** die Sende-/Empfangseinheit eingerichtet ist, diese vorherbestimmte Nachricht an die andere Partei für die Verbindung eine vorherbestimmte Anzahl mal oder bis diese vorherbestimmte Nachricht von der anderen Partei für die Verbindung empfangen worden ist, zu übertragen.

4. Verfahren nach einem der Ansprüche 1 bis 3, **dadurch gekennzeichnet, dass** die Sende-/Empfangseinheit die Sende-/Empfangseinheit einer Mobilstation oder einer Basisstation ist.

5. Mobiles Kommunikationssystem mit einer ersten und einer zweiten Sende-/Empfangseinheit (1, 2, TBS1), die miteinander kommunizieren und Mittel umfassen zum Verwenden diskontinuierlicher Übertragung, **dadurch gekennzeichnet,**
**dass** die Übertragungsmittel der ersten und der zweiten Sende-/Empfangseinheit (1, 2, TBS1) eingerichtet sind, nach dem Aufbau einer Datenübertragungsverbindung eine vorherbestimmte Nachricht zu übertragen, welche der anderen Partei für die Datenübertragungsverbindung anzeigt, dass diskontinuierliche Übertragung erlaubt ist,
**dass** die erste und die zweite Sende-/Empfangseinheit (1, 2, TBS1) Erfassungsmittel zum Erfassen des Empfangs der vorherbestimmten Nachricht umfassen, und
**dass** die Mittel zum Anwenden diskontinuierlicher Übertragung der ersten und der zweiten Sende-/Empfangseinheit (1, 2, TBS1) jeweils verantwortlich sind für die Erfassungsmittel, um diskontinuierliche Übertragung mit der anderen Partei einzuführen, sobald die Erfassungsmittel der ersten und zweiten Sende-/Empfangseinheit jeweils den Empfang der vorherbestimmten Nachricht erfasst haben.

6. Mobiles Kommunikationssystem gemäß Anspruch 5, **dadurch gekennzeichnet, dass** die erste und zweite Sende-/Empfangseinheit (1, 2, TBS1) Sende-/Empfangseinheiten von Mobilstationen sind und dass die Telekommunikationsverbindung zwischen der ersten und der zweiten Sende-/Empfangseinheit (1, 2) über wenigstens eine Basisstation (TBS2) gebildet wird.

7. Mobiles Kommunikationssystem gemäß Anspruch 5, **dadurch gekennzeichnet, dass** die erste Sende-/Empfangseinheit (1) die Sende-/Empfangseinheit einer Mobilstation ist und dass die zweite Sende-/Empfangseinheit die Sende-/Empfangseinheit einer Basisstation (TBS1) ist.

8. Sende-/Empfangseinheit (4) in einem mobilen Kommunikationssystem, wobei die Sende-/Empfangseinheit umfasst:
einen Sender (5, 7) mit Mitteln zum Anwenden der diskontinuierlicher Übertragung,
einen Empfänger (6, 7) zum Empfangen von Signalen von einem Funkweg, und
Erfassungsmittel (6, 8) zum Erfassen einer vorherbestimmten Nachricht, die anzeigt, dass diskontinuierliche Übertragung erlaubt ist, aus den Signalen, die durch den Empfänger empfangen worden sind,
**dadurch gekennzeichnet,**
**dass** der Sender (5, 7) eingerichtet ist, nach dem Verbindungsaufbau einer neuen Verbindung die vorherbestimmte Nachricht an die andere Partei für die Verbindung zu übertragen, welche anzeigt, dass diskontinuierliche Übertragung erlaubt ist,
**dass** der Sender (5, 7) verantwortlich ist für die Erfassungsmittel (6, 8), um diskontinuierliche Übertragung mit der anderen Partei einzuführen, nachdem die Erfassungsmittel die von der anderen Partei für die Verbindung empfangene Nachricht erfasst haben, die anzeigt, dass diskontinuierliche Übertragung erlaubt ist, und
**dass** der Empfänger (4) Mittel (6, 7) zum Empfangen von Parametern umfasst, welche Comfort-Noise anzeigen, aus dem Funkweg und Mittel (6) zum Erzeugen und Weiterleiten von Comfort-Noise gemäß diesen Parametern.

9. Sende=/Empfangseinheit nach Anspruch 8, **dadurch gekennzeichnet, dass** der Sender (5, 7) eingerichtet ist, die vorherbestimmte Nachricht, die diskontinuierliche Übertragung der anderen Partei für die Verbindung über einen Verkehrskanal des mobilen Telekommunikationssystems anzeigt, zu übertragen.

10. Sende-/Empfangseinheit nach Anspruch 8 oder 9, **dadurch gekennzeichnet, dass** die Sende-/Empfangseinheit die Sende-/Empfangseinheit einer Basisstation in dem mobilen Kommunikationssystem ist.

11. Sende-/Empfangseinheit gemäß Anspruch 8 oder 9, **dadurch gekennzeichnet, dass** die Sende-/Empfangseinheit die Sende-/Empfangseinheit (4) einer Mobilstation in dem mobilen Kommunikationssystem ist.

12. Sende-/Empfangseinheit gemäß Anspruch 8 oder 9, **dadurch gekennzeichnet, dass** die Sende-/Empfangseinheit die Sende-/Empfangseinheit einer Mobilstation in einem TETRA-System ist.

## Revendications

1. Procédé permettant de mettre en oeuvre une transmission discontinue d'une unité d'émission et de réception dans un système de communication mobile, **caractérisée par** les étapes consistant à :
commander à l'unité d'émission et de réception de transmettre, après l'établissement de la connexion d'une nouvelle- communication, un message prédéterminé indiquant à l'autre partie à la connexion qu'une transmission discontinue est autorisée ;
surveiller des signaux reçus par ladite unité d'éinission et de réception en provenance de l'autre partie à la connexion, afin de détecter le message prédéterminé indiquant qu'une transmission discontinue est autorisée ; et
commander à l'unité d'émission et de réception d'utiliser une transmission discontinue avec ladite autre partie quand le message prédéterminé a été reçu.

2. Procédé selon la revendication 1, **caractérisé en ce que** ladite unité d'émission et de réception est prévue pour transmettre ledit message prédéterminé sur un canal de trafic du système de communication mobile.

3. Procédé selon la revendication 1 ou 2, **caractérisé en ce que** ladite unité d'émission et de réception est prévue pour transmettre ledit message prédéterminé vers l'autre partie à la connexion un nombre de fois prédéterminé ou jusqu'à ce que ledit message prédéterminé ait été reçu de l'autre partie à la connexion.

4. Procédé selon l'une quelconque des revendications 1 à 3, **caractérisé en ce que** ladite unité d'émission et de réception est l'unité d'émission et de réception d'une station mobile ou d'une station de base.

5. Système de communication mobile, comprenant :
une première et une seconde unités d'émission et de réception (1, 2, TBS1) qui communiquent l'une avec l'autre et comprenant des moyens pour utiliser une transmission discontinue, **caractérisé en ce que** les moyens de transmission de la première et de la seconde unités d'émission et de réception (1, 2, TBS1) sont prévus pour transmettre, après l'établissement d'une connexion de transmission de données, un message prédéterminé indiquant à l'autre partie à la connexion de transmission de données qu'une transmission discontinue est autorisée ; que
la première et la seconde unités d'émission et de réception (1, 2, TBS1) comprennent des moyens de détection pour détecter la réception dudit message prédéterminé ; et que
les moyens pour utiliser une transmission discontinue de la première et de la seconde unités d'émission et de réception (1, 2, TBS1) respectivement répondent aux moyens de détection afm d'introduire une transmission discontinue avec ladite autre partie quand les moyens de détection de la première ou de la seconde unités d'émission et de réception respectivement ont détecté la réception dudit message prédéterminé.

6. Système de communication mobile selon la revendication 5, **caractérisé en ce que** la première et la seconde unités d'émission et de réception (1, 2, TBS1) sont des unités d'émission et de réception de stations mobiles, et que la connexion de télécommunication entre la première et la seconde unités d'émission et de réception (1, 2) est formée par le biais d'au moins une station de base (TBS2).

7. Système de communication mobile selon la revendication 5, **caractérisé en ce que** la première unité d'émission et de réception (1) est l'unité d'émission et de réception d'une station mobile, et que la seconde unité d'émission et de réception est l'unité d'émission et de réception d'une station de base (TES1).

8. Unité d'émission et de réception (4) dans un système de communication mobile, l'unité d'émission et de réception comprenant :
un émetteur (5, 7) comprenant des moyens pour utiliser une transmission discontinue ;
un récepteur (6, 7) pour recevoir des signaux en provenance d'un trajet radio ; et
des moyens de détection (6, 8) pour détecter un message prédéterminé indiquant qu'une transmission discontinue est autorisée à partir des signaux reçus par le récepteur, **caractérisée en ce que** :
l'émetteur (5, 7) est prévu pour transmettre, après l'établissement de la connexion d'une nouvelle communication, le message prédéterminé indiquant qu'une transmission discontinue est autorisée vers l'autre partie participant à la communication ; que
l'émetteur (5, 7) répond aux moyens de détection (6, 8) afin d'introduire une transmission discontinue avec ladite autre partie après que les moyens de détection ont détecté le message indiquant qu'une transmission discontinue est autorisée reçu de l'autre partie participant à la communication ; et que
le récepteur (4) comprend des moyens (6, 7) pour recevoir des paramètres décrivant un bruit de confort en provenance du trajet radio, et des moyens (6) pour générer et transmettre un bruit de confort sur la base desdits paramètres.

9. Unité d'émission et de réception selon la revendication 8, **caractérisée en ce que** l'émetteur (5, 7) est prévu pour transmettre ledit message prédéterminé indiquant une transmission discontinue vers l'autre partie participant à la communication sur un canal de trafic du système de communication mobile.

10. Unité d'émission et de réception selon la revendication 8 ou 9, **caractérisée en ce que** ladite unité d'émission et de réception est l'unité d'émission et de réception d'une station de base dans le système de communication mobile.

11. Unité d'émission et de réception selon la revendication 8 ou 9, **caractérisée en ce que** ladite unité d'émission et de réception est l'unité d'émission et de réception (4) d'une station mobile dans le système de communication mobile.

12. Unité d'émission et de réception selon la revendication 8 ou 9, **caractérisée en ce que** ladite unité d'émission et de réception est l'unité d'émission et de réception d'une station mobile dans le système TETRA.
